# EUROPEAN PATENT SPECIFICATION

(11) **EP 3 875 994 B1**
(45) Date of publication and mention of the grant of the patent: **09.04.2025**
(21) Application number: 21170626.2
(22) Date of filing: 07.12.2011
(51) Int. Cl.: G01V 11/00

(54) **FLUID PROPERTIES INCLUDING EQUATION OF STATE MODELING WITH OPTICAL CONSTRAINTS**
MODELLIERUNG VON FLÜSSIGKEITSEIGENSCHAFTEN MITTELS ZUSTANDSGLEICHUNGSMODELLIERUNG MIT OPTISCHEN RANDBEDINGUNGEN
PROPRIÉTÉS D'UN FLUIDE COMPRENANT UNE MODÉLISATION PAR ÉQUATIONS D'ÉTAT AVEC DES CONTRAINTES OPTIQUES

(30) Priority: 08.12.2010 US 42084510 P
(43) Date of publication of application: 08.09.2021
(62) Divisional of application: 11846994.9
(73) Proprietor: Halliburton Energy Services, Inc., Houston, TX 77032-3219 (US)
(72) Inventor: Pelletier, Michael T., Houston, TX, 77095 (US); Jones, Christopher M., Houston, TX, 77084 (US); Wilson, Jim R., Montgomery, TX, 77356 (US); Engelman, Robert E., Katy, TX, 77494 (US)
(74) Representative: Hoffmann Eitle

(56) References cited:
- WO-A1-2009/142873
- WO-A2-01/63217
- WO-A2-2009/138911

## Description

### TECHNICAL FIELD

This invention relates to characterization of oil and gas reservoirs, and more particularly to using equation of state modeling for reservoir characterization in connection with drilling operations.

### BACKGROUND OF THE INVENTION

A reservoir is formed of one or more subsurface rock formations containing oil and/or gas. The reservoir rock is porous and permeable. The degree of porosity relates to the volume of liquid and gas contained in the reservoir. The permeability relates to the reservoir fluid's ability to move through the rock and be recovered for production to the surface.

Reservoirs are conventionally drilled using drilling fluid (e.g., "mud"). The drilling fluid includes particulate material. The fluid used in the drilling fluid generally includes clay and/or either water or another organic material (e.g., oil or organic-based mud ("OBM")). The purposes of the drilling fluid include: (1) to add pressure to keep the drill hole from collapsing (such that deeper drilling can performed); (2) to over pressurize by making the hydrostatic pressure in the wellbore exceed the reservoir's pressure such that fluid does not come rushing to the surface (e.g., oil does not spew from the ground); (3) to cool the bit; and (4) to provide sufficient viscosity to carry the cutting material to the surface. The goal is to provide adequate pressure, but not so much as to crack the drill hole.

Reservoirs are conventionally drilled overbalanced, in which drilling fluid, chemicals and weighted material are circulated into and out of the wellbore to maintain well control by making hydrostatic pressure in the wellbore exceed the reservoir's pressure. A disadvantage in drilling overbalanced is formation damage that occurs when drilling fluids, solids, fines, and chemicals that are circulated into the wellbore to maintain the overbalanced condition penetrate into the formation. Such penetration, or skin damage, impedes or stops hydrocarbons that would otherwise flow into the wellbore during production operations. However, overbalanced drilling technique may be required for wellbore control, particularly for preventing formation fluids (or reservoir fluids and/or native fluids) from flowing uncontrolled into the wellbore.

Fluids may be measured downhole (i.e., logging a well) to discover the location of oil-bearing formation. When overbalanced drilling technique is used, drilling fluid filtrate will tend to penetrate the surrounding formation. Thus the fluid in the formation close to the wellbore may be a mixture of formation fluid and drilling fluid (i.e., contaminations). Such contaminations often interfere with attempts to sample and analyze the reservoir fluid, when logging a wellbore to discover an oil-bearing formation. Hence it may be desirable to minimize contaminations in the reservoir fluid or at least analyze and determine the level of fluid contamination.

Therefore, one purpose of measuring fluids downhole is evaluating and sampling the reservoir fluids. During sampling, a sample of reservoir fluid and/or native fluid is collected. To do so, a probe is sent downhole into a wellbore. Out of the probe comes an isolation device, which may consist of a set of packers to seal off all but a small section of the formation. Alternatively, a pad with a tiny hole may be positioned on the side of a well, and fluid may be sucked into the probe through the hole. When pumping begins, the contamination fluid, e.g., the drilling fluid, is initially retrieved. For example, if drilling was performed using OBM, OBM is initially received in the probe. As pumping continues, an increasing concentration of the native formation fluid is obtained. The goal is to minimize the amount of contamination fluid, capture the native fluid, test the native fluid to see if the native fluid is oil, determine the producibility of that oil, and determine the commercial value of that oil to make production decisions. The composition of the oil/formation fluid may also be tested, and an assay may be taken to determine the oil's value. The oil may be measured for physical properties to determine how to produce oil from the formation.

There exists a continuing need in the art for methods of determining unknown properties of a reservoir fluid and calibrating the measurement instruments used in the methods. This invention answers this need.

WO 2009/142873 A1 discloses methods and an apparatus for acquiring mud gas logging data, comparing the mud gas logging data to second data associated with a sidewall fluid sample measurement, and adjusting calibration data associated with a mud gas logging tool based on the comparison of the mud gas logging data and the second data associated with the sidewall fluid sample measurement.

WO 2009/138911 A2 discloses a method and a system for characterizing formation fluids contaminated with drilling mud that compensates for the presence of such drilling mud.

### SUMMARY

The invention provides for a method of determining a missing or unknown property of a reservoir fluid and is defined by the appended set of claims.

### DETAILED DESCRIPTION

It should be understood at the outset that although illustrative examples of one or more embodiments is provided below, the disclosed systems and/or methods may be implemented using any number of techniques, fluids, fluid components, or the like. The disclosure should in no way be limited to the illustrative implementations, drawings, and techniques illustrated below, including the exemplary methods and implementations illustrated and described herein, but may be modified within the scope of the appended claims.

The invention provides for a method of determining a missing or unknown property of a reservoir fluid. The method comprises the steps of measuring one or more responses of a measuring instrument to the reservoir fluid; measuring one or more physical or chemical properties of the reservoir fluid; and determining the unknown property of the reservoir fluid based on the relationship between the instrument responses and the measured properties of the reservoir fluid using Equation of State (EOS) model.

EOS modeling may be used as a method for predicting physical properties, such as macroscopic PVT properties of fluids including bubble point, dew point, phase envelope, viscosity, density, combinations thereof, and the like, from chemical compositions including component concentrations, molecular weight, molecular weight distribution, gas/oil ratios ("GOR"), combinations thereof, or the like.

Using alternating routines, if chemical composition information is known and physical properties (or physical information derived from physical properties) are known, missing or unknown properties may be determined. For instance, for a determined or overdetermined system (i.e., a system of linear equations having more equations than unknowns) for mathematical modeling, when a relative distribution of some components are known, then this information along with the known physical properties may be combined and used to determine the missing or unknown information, including the whole chemical composition. This may be used, for example, to "absolutely" calibrate an optical system on the fly. Absolute determination of an unknown property or absolute calibration of a measure instrument provides quantitative results or definite values that are independent of state conditions or methods and procedures used to the determination/calibration. On the other hand, a relative determination of an unknown property or relative calibration of a measure instrument may provide for consistency of measurements internal to an instrument, or across instruments, but may not provide a universal standard.

Various physical or chemical properties or information of the reservoir fluid that is missing or unknown may be determined. For example, the missing or unknown property may be a macroscopic property of the fluid including, but not limited to, bubble point, dew point, phase envelope, viscosity, density, optical density, compressibility, saturation pressure, mobility, heat capacity, thermal conductivity, resistivity, radioactivity, dielectric constant, acoustic impedance, acoustic velocity, magnetic resonance, formation volume factor, thermal expansion, differential liberation, constant composition expansion, phase volumetries, and combinations thereof. The missing or unknown property may also be a chemical or compositional property, including but not limited to, component concentrations (such as Cl (methane), C2 (ethane), C3 (propane) etc, saturates, aromatics, resins, asphaltenes, acids, total acid number, cation concentrations, anion concentrations, organometalics, mercaptians, mercury, water concentration), chromatography, molecular weight, molecular weight distribution, gas to oil ratio (GOR), pH, Eh (i.e., redox potential), oil fingerprint, oil type, and combinations thereof.

Similarly, various physical or chemical properties of the reservoir fluid may be measured to be used in EOS model as known information to determine the missing or unknown property. These physical or chemical properties have been discussed in the above embodiments. Additionally, the physical or chemical information derived from physical measurements taken downhole may also be used in the EOS model as known information. For example, a downhole optical measurement may suggest that the relative fractions of the fluids (e.g., the composition concentration of light hydrocarbons) follows a discrete ratio (e.g., a methane concentration is twice as much as that of ethane, which is twice as much as that of propane, which is twice as much as that of butane, which is twice as much as that of pentane, etc.), however, the absolute concentrations of these light hydrocarbons are not known. A downhole density measurement of the fluid can then be used as a "tie in" to conduct an uphole dead oil density analysis. ("Dead oil" typically refers to an oil at sufficiently low pressure that contains substantially no dissolved gas or a relatively thick oil or residue that has lost its volatile components. An uphole fluid sample may hence be referred to as "dead oil" due to the low pressure uphole.) In this regard, an EOS model can be used together with the downhole density measurements of the fluid to provide a fit of reconstitution for reconstituting the uphole dead oil density. For example, EOS model can mathematically add the downhole measured ratios of concentrations of light hydrocarbons into the uphole dead oil solution's composition based on the dead oil density, until the "reconstituted density" matches the downhole density measured. After each composition (e.g., concentration of each component) of the light hydrocarbon is reconstituted, other properties related to the composition may also be derived, such as compressibility, bubble point, and the like. When more properties or information can be measured downhole, the combination of these measurements can be used to provide a better fit of reconstitution. For example, if compressibility or bubble point can be measured downhole, these measured properties can then be used with density to provide a better fit of reconstitution. Additional weighting of "tie-in parameters" may be normalized according to the sensitivity of the EOS model to the tie-in parameter. In other words, depending on the confidence that is attributed to the properties of any one parameter in a certain EOS model (and the sensitivities of that EOS model), that parameter may be weighted more heavily than other parameters.

One or more constraints may be used in the EOS model for determining the missing or unknown property of the reservoir fluid. For instance, if a relative distribution of some components of a formation fluid may be modeled (i.e., ratios of two or more components), then the resulting constraint may be explicitly used to solve for drilling fluid contamination. Constraints may not be needed if the system for EOS modeling is a determined or overdetermined system. Absolute determination, or close to absolute determination of the missing or unknown property may then be obtained through this process.

Constraints that may be used for the EOS model include component concentrations (e.g., relative compositional distributions of two or more components), compositional grading of a reservoir (variations of the optical signal itself), density grading of a reservoir, bubble point variations of a reservoir, or combinations thereof.

The constraints may be modeled from fluid pumped out at a constant height within the reservoir. For instance, the constraints may include bubble point variation, density variation, compressibility variation, or combinations thereof, throughout a pump out at a consistent height within a reservoir, if at least one pure end member (drilling fluid filtrate) composition or relative composition is known. See, e.g, U.S. Patent No. 7,251 ,565 B2.

The constraints for determining the unknown property may also include theoretical assumptions, semi-empirical assumptions, or empirical assumptions. Thus the determination of the fluid property using the EOS model may be a semi-empirical or an empirical determination.

One application of using the constraints to determine the unknown property of a reservoir fluid is to determine the fluid contamination. In an exploration well, for example, oil may not be actually produced. Rather, the value of the oil is measured, and it is determined, for example, how producible the oil is. To determine this, a downhole sample with minimal contamination (i.e., a clean sample) may be obtained, and it should be determined that the sample is sufficiently clean before deciding to retrieve/take a sample. Measuring instruments containing one or more detectors and/or sensors may be used to indicate if the sample includes contaminants, formation fluid, etc.

According to some embodiments, EOS modeling utilizes information or properties such as temperature, pressure, and composition. For example, one simple equation of state is PV = nRT, known as the ideal gas law. When the physical properties and composition of the reservoir fluid under a given set of conditions are known, the behavior of the reservoir fluid at other pressures and temperatures may be predicted. Thus, when drilling, the change in the temperature and pressure across the depth of a reservoir interval, between the reservoir condition and tool condition, or from downhole conditions to surface conditions would be known.

Formulas that may be used with the embodiments of the invention include, for example, expansions of the ideal gas law to account for individual molecular compositions. According to some embodiments, they are third order equations. One example is the Peng- Robinson EOS with modifications for liquid volumes.

The equations of state have many names, as they have been modified to improve the match between predicted and observed behavior. The big families include the cubic equations based on the ideal gas law expanded by Van der Waals, further modified by Soave, Redlich, Kwong, and again modified by Peng and Robinson and, later, by Peneloux. The manipulations were driven to match the phase behavior and, in particular, the volumetric behavior of multi-component systems.

According to one embodiment, the described method utilizes the ideal gas law PV=nRT, where P = pressure, V= volume, n = moles, R = Ideal Gas Constant (also used for units conversion), and T = absolute temperature (Kelvin or Rankine).

According to another embodiment, the ideal gas law is modified to include a pressure/temperature function to correct volumes at low temperatures and high pressures. The resulting equation is PV = znRT, where z = super compressibility factor (Standings & Katz correlation) based on reduced temperature and pressure. More specifically, z = f{(T/T_{crit}),(P/P_{crit})}, where T_{crit} and P_{crit} are properties at the critical point, and f is a convenient mathematical fit of the data resulting from measuring the real volume of the system divided by the ideal volume of the system at a range of temperatures and pressures. Typically, the data for many gases showed the same or similar behaviors once the data had been divided by the appropriate critical temperature or pressure.

The above described equation of state can be used to describe a single component gas system. The generalization to multiple-component system requires the accommodation of the n and z terms to include the average molecular weight and the compositional effects on the critical point properties of the system. See, e.g., Pedersen et al., "Phase Behavior of Petroleum Reservoir Fluids," CRC press, 2007.

Formation evaluation tools may be used to measure responses of a reservoir fluid. Any measuring instrument capable of producing a measurable response to the change of the fluid property may be used. The measuring instrument may contain a detector and/or sensor detecting, for example, density, resistivity/conductivity, viscosity, chromatography, radioactivity, dielectric constant, optical density, magnetic resonance, weight, acoustic impedance, acoustic velocity, optical response, diffusion coefficients, molecular weight, refractive index at various wavelengths, and combinations thereof. One or more sensors or detectors may be used in the measuring instrument.

In one embodiment, molecular weight ("MW") of a gas may be determined by measuring different properties using different detectors or sensors. For example, a density sensor may be used to measure the density of a fluid flowing through the sensor (e.g, with a unit of gm/cc). This data may be used to estimate the molecular weight of a gas by using the equation n/V=P/(zRT), where n/V is measured in moles/volume. The above equation can be converted to n/V*MW = MW*P/(zRT) = ρ, where MW=mass/mole, n/V = moles/volume, and ρ = density in mass/volume. The measurement of the speed of sound, for example, may be another way to determine the average molecular weight of a gas.

The composition of the gas may affect the estimates of molecular weight and z. Hence the behavior of the system may be estimated by making multiple assumptions about the composition. For example, in some circumstances, it can be assumed that methane makes up the majority of the composition and that methane is likely the component with a largest concentration by weight percentage. Hence the certainty of the determination of missing or unknown information or property of the fluid can be improved if the methane content is measured directly from an optical means (e.g., using an optical detector) or other methods.

The certainty of the determination may be further improved if carbon dioxide can also be quantified. In some oil provinces of the world, the carbon dioxide content of the gas plays an important role in determining economic viability of the resource. Hence with each additional constraint or assumption used in EOS modeling, uncertainty is reduced and the value of the unknown property may be better quantified.

Ideally, a detector or sensor can be used to determine a property, such as composition, of a fluid. In reality, sensors typically have limited accuracy. The accuracy depends at least in part on the conditions of the measurement (e.g., pressure, temperature, and composition). For instance, the measurements may be negatively affected by pressures, temperatures, and compositions with which the sensor is unfamiliar.

A method of calibrating a measuring instrument comprises the steps of measuring one or more responses of a measuring instrument to a fluid; obtaining one or more properties of the fluid; and determining calibration information of the measuring instrument by correlating the instrument responses and the obtained properties of the fluid using EOS model.

In one example, a physical property of the oil (e.g., density and compressibility) is measured or derived from a measurement and the response of an optical sensor is measured, a constraint may then be obtained through EOS modeling to correct for inaccuracies of the optical sensor. This correction could, for example, be as simple as measuring optical responses of the detector to a fluid before and after changing the pressurization of the fluid, relate the changed optical responses to the change of physical properties (e.g., density and compressibility before and after pressurization), use EOS modeling to obtain a constraint, and then use the constraint to correct the accuracy of the optical detector. Hence obtaining one or more constraints through EOS modeling may include measuring at least one physical property under at least two different conditions and measuring the optical response. The constraints may correct for offsets in the measurements of physical properties through optical detectors.

According to the invention, the refractive index of the lens of an optical sensor varies as a function of the density of the sample. The EOS modeling takes this relationship into account. For example, saturates, aromatics, resins, and asphaltenes, have rather narrow ranges for refractive index, and gas components have well-defined influence on index of refraction. Hence, index of refraction is predicted via composition of fluid. Density also influences index of refraction in a known manner so density can be used to normalize the index-of-refraction response. Theoretically, the optical density of all components increases proportionally with an increase in physical density. This relationship may be used to normalize instrument responses not related to concentration. For instance, the optical effect of contamination on the windows would not increase with physical density, and therefore this effect could be mitigated. However, to apply this correction, the index-of-refraction effect would have to be accounted for, as described above.

In one example, the sample contained within an optical sensor may be compressed such that the concentration of the sample increases by about 10%, as measured by a densitometer. Therefore, the concentrations of all constituents including GOR dissolved gasses including substrates, aromatics, hydrocarbons, resins, and asphaltines increase by about 10%. Because more gas and other components are typically included in a smaller volume, differences in particular properties may be assigned to the about 10% change.

In one example, absolute composition or relative component concentration of a fluid may be used to calibrate the measuring instrument. For example, component concentration of a clean sample (e.g., a downhole sample with minimal contamination) can be used to normalize a set of responses of the instrument to the fluid, and hence this known composition of the clean sample may be used as a standard. Similarly, a drilling fluid having a known concentration may also be used as a standard, although the downhole conditions (e.g., temperature and pressure downhole) should be calculated, for instance, via EOS.

Constraints may not be needed if the system for EOS modeling is a determined or overdetermined system. Absolute calibration of the measuring instrument may then be obtained through this system.

Another aspect of the invention relates to a method of determining an unknown property of a reservoir fluid includes the steps of measuring one or more responses of a measuring instrument to the fluid; measuring one or more physical or chemical properties of the fluid; obtaining one or more constraints through EOS modeling; applying the constraints to calibrate the measuring instrument; and determining the unknown property of the fluid based on the relationship between the instrument responses and the measured properties of the fluid using EOS model.

In a general aspect, the physical properties of a fluid and composition as measured under a first set of conditions may be used to predict how these properties will vary under other conditions. Thus, a clean sample and the detected physical properties of that clean sample retrieved downhole may be used to model a well by testing the retrieved clean sample under different conditions. For example, physical properties (e.g., density, compressibility, optical measurements) are measured for a sample, e.g., oil, downhole. EOS may then be employed to correct offsets. According to some aspects, the corrections of offsets are made on-the-fly internally within the probe. According to other aspects, the corrections of offsets are made on-the-fly to calibrate the downhole sensors.

"On-the-fly determination" of physical property of a reservoir fluid or "on-the-fly calibration" refers to a real-time determination of the unknown properties of a reservoir fluid or calibration of measuring instruments accomplished during the field use, as opposed to prior to the field use or post field use, e.g., during logging, without retrieving the measuring instruments or reservoir fluid from downhole or from the measuring probes. An "on-the-fly determination" allows a user to determine an unknown property or make calibration at or about the same time that the measurements are made.

A fluid may be measured either uphole or downhole. Downhole properties may not agree with properties measured uphole not only because the sensors can respond to a fluid differently, but also because the actual properties may vary even for the same sample fluid, depending on the conditions under which they are measured. For instance, uphole temperature is typically lower than downhole and uphole pressure is also typically reduced compared with downhole, both of which may affect the properties of the fluid. Hence, in a general aspect, a first raw compensation may be used to predict a set of physical properties. If these predicted physical properties do not match with the measured values, the relative response may be maintained, and the overall response to get a consistency between the downhole properties (i.e., properties measured downhole during logging) and the physical properties may be varied.

Optical variations may be used as a constraint on composition to allow the composition to vary until all of the parameters are consistent. Thus, factors on both sides of an equation of state may be adjusted until the equation balances. Alternatively, factors in the model and the interpretation may be adjusted until the observation sets match. A downhole curve may be developed by measuring viscosity.

The embodiments of the present invention may also be employed with dynamic systems. Diffusion occurs out of the system, and heavy compositions may come up into the oil. As sample fluid is pulled back into the probe, a concentration gradient may be predicted. For example, the concentration of the formation fluid may be increasing in such condition. The model can be flexible in making the predictions.

EOS modeling may be used to obtain calibration information for instrumentation. The information may be used, for example, to calibrate sensors on-the-fly while the sensors are downhole and being used under varying conditions.

For instance, a sensor may be calibrated by determining the temperature, pressure, composition, or combinations thereof of a drilling fluid. EOS modeling is then used to obtain calibration information from the temperature, pressure, and/or compositions of the drilling fluid. The offsets may be corrected on-the-fly to calibrate the sensor.

While the present invention has been described with reference to one or more particular embodiments, those skilled in the art will recognize that many changes may be made thereto without departing from the scope of the present invention.

## Claims

1. A method of determining an unknown property of a reservoir fluid, comprising the steps of:
measuring one or more responses of a measuring instrument to the reservoir fluid, wherein the measuring instrument contains an optical sensor;
measuring one or more physical or chemical properties of the reservoir fluid, wherein the one or more physical or chemical properties includes density; and
determining the unknown property of the reservoir fluid based on the relationship between the instrument responses and the measured properties of the reservoir fluid using an equation-of-state, EOS, model;
the method being **characterized in that**
the refractive index of the lens of the optical sensor varies as a function of the density of the reservoir fluid and **in that** the EOS model takes account of the relationship between the refractive index of the lens of the optical sensor and the density of the reservoir fluid.

2. The method of claim 1, wherein the unknown property is determined at or about the same time that the measurements are made.

3. The method of claim 1, wherein the unknown property is a macroscopic property of the fluid selected from the group consisting of bubble point, dew point, phase envelope, viscosity, compressibility, saturation pressure, mobility, heat capacity, thermal conductivity, and combinations thereof.

4. The method of claim 1, wherein the unknown property is a compositional property of the fluid selected from the group consisting of component concentrations, molecular weight, molecular weight distribution, gas-to-oil ratio (GOR), and combinations thereof.

5. The method of claim 1, wherein the determination of the unknown property using EOS model is an empirical determination.

6. The method of claim 1, wherein the determination of the unknown property using EOS model is a semi-empirical determination.

7. The method of claim 1, wherein one or more constraints are used in EOS model for the determination of the unknown property or information.

8. The method of claim 7, wherein the constraint is used to determine fluid contamination.

9. The method of claim 7, wherein the constraint is a theoretical assumption, semi-empirical assumption, empirical assumption, or a combination thereof.

10. The method of claim 7, wherein the constraint is a component concentration, compositional grading of the reservoir, density grading of the reservoir, bubble point variations of the reservoir, compressibility variation of a reservoir, or combinations thereof.

11. The method of claim 7, wherein the one or more constraints are modeled from a fluid pumped out at a constant height within the reservoir.

12. The method of claim 1, wherein the measuring instrument contains at least one detector and/or sensor selected from the group consisting of a density sensor, capacity sensor, resistivity sensor, viscosity sensor, radioactivity sensor, and acoustic sensor.

13. The method of claim 1, further comprising the steps of:
obtaining one or more constraints through equation of state modeling; and
adjusting the accuracy of the measuring instrument using the constraints.

14. The method of claim 13, wherein the act of obtaining the constraint through equation-of-state modeling includes measuring the optical response of at least one physical property under at least two different conditions.

15. The method of claim 14, wherein the constraint corrects for offsets in the measurements of physical or chemical properties.

16. The method of claim 1, wherein at least one of the physical properties is selected from the group consisting of dew point, phase envelope, viscosity, density, compressibility, bubble point, saturation pressure, mobility, heat capacity, and thermal conductivity.

17. The method of claim 1, wherein the physical properties are derived from physical measurements taken downhole in a well.

18. The method of claim 1, wherein at least one of the chemical properties is selected from the group consisting of component concentrations, molecular weight, molecular weight distribution, and gas-to-oil ratio (GOR).

## Patentansprüche

1. Verfahren zum Bestimmen einer unbekannten Eigenschaft einer Lagerstättenflüssigkeit, das die folgenden Schritte umfasst:
Messen einer oder mehrerer Reaktionen eines Messinstruments auf die Lagerstättenflüssigkeit, wobei das Messinstrument einen optischen Sensor enthält;
Messen einer oder mehrerer physikalischer oder chemischer Eigenschaften der Lagerstättenflüssigkeit, wobei die eine oder die mehreren physikalischen oder chemischen Eigenschaften die Dichte einschließen; und
Bestimmen der unbekannten Eigenschaft der Lagerstättenflüssigkeit basierend auf der Beziehung zwischen den Instrumentenreaktionen und den gemessenen Eigenschaften der Lagerstättenflüssigkeit unter Verwendung eines Zustandsgleichungsmodells (EOS-Modells);
wobei das Verfahren **dadurch gekennzeichnet ist,**
**dass** der Brechungsindex der Linse des optischen Sensors als Funktion der Dichte der Lagerstättenflüssigkeit variiert und dass das EOS-Modell die Beziehung zwischen dem Brechungsindex der Linse des optischen Sensors und der Dichte der Lagerstättenflüssigkeit berücksichtigt.

2. Verfahren nach Anspruch 1, wobei die unbekannte Eigenschaft zum oder etwa zum gleichen Zeitpunkt bestimmt wird, zu dem die Messungen vorgenommen werden.

3. Verfahren nach Anspruch 1, wobei die unbekannte Eigenschaft eine makroskopische Eigenschaft der Flüssigkeit ist, die aus der Gruppe bestehend aus Siedepunkt, Taupunkt, Phasenhülle, Viskosität, Kompressibilität, Sättigungsdruck, Mobilität, Wärmekapazität, Wärmeleitfähigkeit und Kombinationen davon ausgewählt ist.

4. Verfahren nach Anspruch 1, wobei die unbekannte Eigenschaft eine Zusammensetzungseigenschaft der Flüssigkeit ist, die aus der Gruppe bestehend aus Komponentenkonzentrationen, Molekulargewicht, Molekulargewichtsverteilung, Gas-Öl-Verhältnis (GOR) und Kombinationen davon ausgewählt ist.

5. Verfahren nach Anspruch 1, wobei die Bestimmung der unbekannten Eigenschaft unter Verwendung des EOS-Modells eine empirische Bestimmung ist.

6. Verfahren nach Anspruch 1, wobei die Bestimmung der unbekannten Eigenschaft unter Verwendung des EOS-Modells eine semi-empirische Bestimmung ist.

7. Verfahren nach Anspruch 1, wobei eine oder mehrere Randbedingungen im EOS-Modell für die Bestimmung der unbekannten Eigenschaft oder Information verwendet werden.

8. Verfahren nach Anspruch 7, wobei die Randbedingung verwendet wird, um die Flüssigkeitskontamination zu bestimmen.

9. Verfahren nach Anspruch 7, wobei die Randbedingung eine theoretische Annahme, eine semi-empirische Annahme, eine empirische Annahme oder eine Kombination davon ist.

10. Verfahren nach Anspruch 7, wobei die Randbedingung eine Komponentenkonzentration, eine Zusammensetzungsabstufung der Lagerstätte, eine Dichteabstufung der Lagerstätte, Siedepunktvariationen der Lagerstätte, eine Kompressibilitätsvariation einer Lagerstätte oder Kombinationen davon ist.

11. Verfahren nach Anspruch 7, wobei die eine oder die mehreren Randbedingungen aus einer Flüssigkeit modelliert werden, die auf einer konstanten Höhe innerhalb der Lagerstätte abgepumpt wird.

12. Verfahren nach Anspruch 1, wobei das Messinstrument mindestens einen Detektor und/oder Sensor enthält, der aus der Gruppe bestehend aus einem Dichtesensor, Kapazitätssensor, Widerstandssensor, Viskositätssensor, Radioaktivitätssensor und akustischen Sensor ausgewählt ist.

13. Verfahren nach Anspruch 1, das ferner die folgenden Schritte umfasst:
Erhalten einer oder mehrerer Randbedingungen durch Modellieren mit einer Zustandsgleichung; und Einstellen der Genauigkeit des Messinstruments unter Verwendung der Randbedingungen.

14. Verfahren nach Anspruch 13, wobei der Vorgang des Erhaltens der Randbedingung durch Modellieren mit einer Zustandsgleichung das Messen der optischen Reaktion von mindestens einer physikalischen Eigenschaft unter mindestens zwei unterschiedlichen Bedingungen einschließt.

15. Verfahren nach Anspruch 14, wobei die Randbedingung die Abweichungen bei den Messungen der physikalischen oder chemischen Eigenschaften korrigiert.

16. Verfahren nach Anspruch 1, wobei mindestens eine der physikalischen Eigenschaften aus der Gruppe bestehend aus Taupunkt, Phasenhülle, Viskosität, Dichte, Kompressibilität, Siedepunkt, Sättigungsdruck, Mobilität, Wärmekapazität und Wärmeleitfähigkeit ausgewählt ist.

17. Verfahren nach Anspruch 1, wobei die physikalischen Eigenschaften aus physikalischen Messungen abgeleitet werden, die in einem Bohrloch unter Tage vorgenommen werden.

18. Verfahren nach Anspruch 1, wobei mindestens eine der chemischen Eigenschaften aus der Gruppe bestehend aus Komponentenkonzentrationen, Molekulargewicht, Molekulargewichtsverteilung und Gas-Öl-Verhältnis (GOR) ausgewählt ist.

## Revendications

1. Procédé de détermination **d'une** propriété inconnue d'un fluide de réservoir, comprenant les étapes de :
mesure d'une ou plusieurs réponses d'un instrument de mesure au fluide du réservoir, dans lequel l'instrument de mesure contient un capteur optique ;
mesure d'une ou plusieurs propriétés physiques ou chimiques du fluide de réservoir, dans lequel les une ou plusieurs propriétés physiques ou chimiques comportent la densité ; et
détermination de la propriété inconnue du fluide de réservoir sur la base de la relation entre les réponses d'instrument et les propriétés mesurées du fluide de réservoir à l'aide d'un modèle d'équation d'état, EOS ;
le procédé étant **caractérisé en ce que**
l'indice de réfraction de la lentille du capteur optique varie en fonction de la densité du fluide de réservoir et **en ce que** le modèle EOS prend en compte la relation entre l'indice de réfraction de la lentille du capteur optique et la densité du fluide de réservoir.

2. Procédé selon la revendication 1, dans lequel la propriété inconnue est déterminée au moment ou à peu près au même moment où les mesures sont effectuées.

3. Procédé selon la revendication 1, dans lequel la propriété inconnue est une propriété macroscopique du fluide choisie dans le groupe constitué par le point de bulle, le point de rosée, l'enveloppe de phase, la viscosité, la compressibilité, la pression de saturation, la mobilité, la capacité thermique, la conductivité thermique et leurs combinaisons.

4. Procédé selon la revendication 1, dans lequel la propriété inconnue est une propriété compositionnelle du fluide choisie dans le groupe constitué par les concentrations de composants, le poids moléculaire, la distribution de poids moléculaire, le rapport gaz/pétrole (GOR) et leurs combinaisons.

5. Procédé selon la revendication 1, dans lequel la détermination de la propriété inconnue à l'aide du modèle EOS est une détermination empirique.

6. Procédé selon la revendication 1, dans lequel la détermination de la propriété inconnue à l'aide du modèle EOS est une détermination semi-empirique.

7. Procédé selon la revendication 1, dans lequel une ou plusieurs contraintes sont utilisées dans le modèle EOS pour la détermination de la propriété ou de l'information inconnue.

8. Procédé selon la revendication 7, dans lequel la contrainte est utilisée pour déterminer une contamination de fluide.

9. Procédé selon la revendication 7, dans lequel la contrainte est une hypothèse théorique, une hypothèse semi-empirique, une hypothèse empirique ou une combinaison de celles-ci.

10. Procédé selon la revendication 7, dans lequel la contrainte est une concentration de composant, une gradation de composition du réservoir, une gradation de densité du réservoir, des variations de point de bulle du réservoir, une variation de compressibilité d'un réservoir, ou des combinaisons de celles-ci.

11. Procédé selon la revendication 7, dans lequel les une ou plusieurs contraintes sont modélisées à partir d'un fluide pompé à une hauteur constante dans le réservoir.

12. Procédé selon la revendication 1, dans lequel l'instrument de mesure contient au moins un détecteur et/ou un capteur choisi(s) dans le groupe constitué d'un capteur de densité, d'un capteur de capacité, d'un capteur de résistivité, d'un capteur de viscosité, d'un capteur de radioactivité et d'un capteur acoustique.

13. Procédé selon la revendication 1, comprenant en outre les étapes de :
obtention d'une ou plusieurs contraintes par modélisation d'équation d'état ; et
ajustement de la précision de l'instrument de mesure à l'aide des contraintes.

14. Procédé selon la revendication 13, dans lequel l'acte d'obtention de la contrainte par modélisation d'équation d'état comporte la mesure de la réponse optique d'au moins une propriété physique dans au moins deux conditions différentes.

15. Procédé selon la revendication 14, dans lequel la contrainte corrige les décalages dans les mesures de propriétés physiques ou chimiques.

16. Procédé selon la revendication 1, dans lequel au moins l'une des propriétés physiques est choisie dans le groupe constitué par le point de rosée, l'enveloppe de phase, la viscosité, la densité, la compressibilité, le point de bulle, la pression de saturation, la mobilité, la capacité thermique et la conductivité thermique.

17. Procédé selon la revendication 1, dans lequel les propriétés physiques sont dérivées de mesures physiques prises en fond de puits.

18. Procédé selon la revendication 1, dans lequel au moins l'une des propriétés chimiques est choisie dans le groupe constitué par les concentrations de composants, le poids moléculaire, la distribution de poids moléculaire et le rapport gaz/pétrole (GOR).
